# EUROPEAN PATENT APPLICATION

(11) **EP 1 647 922 A1**
(43) Date of publication of application: **19.04.2006**
(21) Application number: 04748092.6
(22) Date of filing: 23.07.2004
(51) Int. Cl.: G06K 19/07, G06K 19/073, G06K 17/00, G06F 12/14

(54) **INFORMATION STORING APPARATUS AND INFORMATION PROCESSING APPARATUS**

(30) Priority: 23.07.2003 JP 2003278344
(71) Applicant: MATSUSHITA ELECTRIC INDUSTRIAL CO., LTD., Kadoma-shi, Osaka 571-8501 (JP)
(72) Inventor: NAKANISHI, Yoshiaki, x (JP)
(74) Representative: Grünecker, Kinkeldey, Stockmair & Schwanhäusser Anwaltssozietät
(86) International application number: PCT/JP2004/010884
(87) International publication number: WO 2005/008576

(57) **Abstract**

The present invention provides a card and a user terminal mounted with the card so that the user terminal can perform a process in cooperation with a contactless communication process performed by the card. A card 30 includes contactless communication means, contact communication means, and control means 33 for performing processes in accordance with commands received from these means. The card 30 further includes information storage means for storing disclosure information to be disclosed through the contact communication means, and information disclosure means 31 for referring to the information storage means in response to an inquiry from a card supervision portion 12 of a user terminal 10. When a process using contactless communication with a service terminal 50 has been terminated, the control means 33 generates disclosure information and stores it in the information storage means. The information disclosure means 31 refers to the information storage means in response to an inquiry from the card supervision portion 12 of the user terminal 10, and discloses the disclosure information when the disclosure information has been stored. The user terminal 10 can notice termination of the contactless communication process of the card 30 based on the disclosure information, and perform another process in cooperation with the process.

## Description

### <TECHNICAL FIELD>

The present invention relates to an information storage device such as a smart card, and information processing apparatus such as a cellular phone mounted with the information storage device so as to perform contact communication therewith.

### <BACKGROUND ART>

In recent years, smart cards have been put into practical use as electronic settlement cards, commutation tickets, prepaid train tickets with pay-in function, and so on. It is expected that applications of the smart cards will expand further. There are two communication methods of the smart cards. One of the methods is contact communication using a reader/writer brought into contact with an electric contact of a smart card so as to read/write recorded information from/into the smart card. The other method is contactless communication for exchanging information by wireless communication without necessity of physical contact with a reader/writer.

Patent Document 1 (JP-A-2002-345037) which will be described below discloses a configuration in which a smart card capable of performing both contact communication and contactless communication is mounted in mobile communication apparatus so that reading/writing of recorded information is performed by contactless communication between the smart card and external apparatus, while the reading/writing is performed by contact communication between the smart card and the mobile communication apparatus.

For example, assume that information about a prepaid train ticket has been recorded in a smart card. In this case, when mobile communication apparatus mounted with the smart card is brought close to a ticket gate machine which is external apparatus, an instruction to read or rewrite information data is input from the ticket gate machine to the smart card by contactless communication. Data of the balance recorded on the smart card is updated in accordance with this instruction.

When a user operates a key of the mobile communication apparatus to give an instruction to display the balance, the instruction is input from the mobile communication apparatus to the smart card by contact communication. Thus, the balance information of the smart card is read out and displayed on a screen of the mobile communication apparatus or output vocally from a speaker of the mobile communication apparatus.

However, the process using contactless communication and the process using contact communication in this apparatus are independent of each other. Accordingly, the related-art apparatus cannot execute these processes in cooperation so that an amount charged, for example, when the apparatus passes through the ticket gate machine, is automatically displayed on the screen etc. of the mobile communication apparatus.

This is because the smart card is originally configured to give a response to a command (simply give a response to an inquiry to an inquirer of the inquiry) and a signal indicating termination of the process by contactless communication cannot be spontaneously issued from the smart card to the mobile communication apparatus.

### <DISCLOSURE OF THE INVENTION>

The present invention is to solve the foregoing problem in the background art. An object of the present invention is to provide an information storage device and information processing apparatus which can realize a process working with a contactless communication process of the information storage device having both contactless communication and contact communication functions.

According to the present invention, in an information storage device including first communication means, second communication means, and control means for performing processes in accordance with commands received from the first communication means and the second communication means, information storage means for storing disclosure information to be disclosed through the second communication means, and information disclosure means for referring to the information storage means in accordance with an inquiry from the second communication means are provided, the control means stores disclosure information indicating a result of a process performed through the first communication means in the information storage means, and the information disclosure means refers to the information storage means in response to an inquiry from the second communication means, and discloses the disclosure information when this disclosure information has been stored.

Thus, information processing apparatus performing communication with the information storage device through the second communication means can notice the result of the process of the information storage device performed through the first communication means based on the disclosure information, so as to perform another process in cooperation with the process.

Further, according to the present invention, in an information storage device including first communication means performing communication in a contactless manner, second communication means performing communication in.a contact manner, and control means for performing processes in accordance with commands received from the first communication means and the second communication means, information storage means for storing disclosure information to be disclosed through the second communication means, and information disclosure means for referring to the information storage means in accordance with an inquiry from the second communication means are provided, the control means generates disclosure information in response to termination of a process performed through the first communication means and stores the disclosure information in the information storage means, and the information disclosure means refers to the information storage means in response to an inquiry from the second communication means and discloses the disclosure information when this disclosure information has been stored.

Thus, information processing apparatus performing contact communication with the information storage device can notice termination of the process of the information storage device performed by contactless communication based on the fact that the disclosure information has been generated, so as to perform another process in cooperation with the contactless communication process.

Further, the control means is designed to perform control so that disclosable information of the result of the process performed through the first communication means is contained in the disclosure information.

Thus, information processing apparatus performing contact communication with the information storage device can display this disclosure information on a screen etc. so as to inform a user of the disclosure information.

Further, the control means is designed to exchange an encryption key in advance with equipment to which the disclosure information should be disclosed through the second communication means, encrypt the disclosure information with the encryption key, and store the encrypted disclosure information in the information storage means.

Thus, the disclosure information can be disclosed only to a terminal application with which the key has been exchanged.

Further, the information disclosure means is designed to give a response to the inquiry from the second communication means without performing any authentication process.

Thus, when the information storage device is engaging in a process using contactless communication, any inquiry using contact communication has no influence on any internal process in the contactless communication.

Further, according to the present invention, information processing apparatus for performing communication through second communication means with an information storage device including first communication means and the aforementioned second communication means, includes disclosure information supervision means for supervising disclosure information indicating a result of a first process through the second communication means, the aforementioned first process being performed by the information storage device through the first communication means. The information processing apparatus is designed to perform a second process when the disclosure information supervision means acquires the disclosure information from the information storage device.

Thus, the information processing apparatus can automatically perform the second process in cooperation with the first process of the information storage device.

Further, according to the present invention, information processing apparatus for performing communication through second communication means with an information storage device including first communication means performing communication in a contactless manner and the aforementioned second communication means performing communication in a contact manner, includes disclosure information supervision means for supervising disclosure information through the second communication means, the disclosure information being generated as soon as the information storage device performing a first process through the first communication means terminates the aforementioned first process. The information processing apparatus is designed to perform a second process in cooperation with the first process when the disclosure information supervision means acquires the disclosure information from the information storage device.

Thus, this information processing apparatus can automatically perform the second process in cooperation with the process of the information storage device performed by contactless communication.

Further, the disclosure information supervision means is designed to perform polling on the information storage device engaging in execution of the first process, for the purpose of supervising the disclosure information.

Thus, a disclosure information generation time, that is, a contactless communication process termination time of the information storage device can be supervised.

Further, as the second process, this information processing apparatus displays the disclosure information acquired from the information storage device.

Thus, a charged amount, a message, and so on contained in the disclosure information can be displayed on a screen etc. of the information processing apparatus.

Further, this information processing apparatus is designed to exchange an encryption key in advance with the information storage device, acquire encrypted disclosure information from the information storage device, and decrypt the disclosure information with the encryption key.

Thus, only the terminal application with which the key has been exchanged can obtain the disclosure information.

In the information storage device according to the present invention, the control means generates disclosure information at the contactless communication process termination time and the information disclosure means discloses the disclosure information in response to an inquiry from the information processing apparatus .performing contact communication. Accordingly, this information processing apparatus can be informed of termination of the contactless communication process.

Further, when the information processing apparatus according to the present invention includes the disclosure information supervision means, the information processing apparatus can notice termination of the contactless communication process of this information storage device and automatically perform another process in cooperation with the contactless communication process.

### <BRIEF DESCRIPTION OF THE DRAWINGS>

Fig. 1 is a block diagram showing the configurations of a user terminal and a card in a first embodiment of the present invention;
Fig. 2 is a diagram for explaining three-party communication among the user terminal, the card, and a service terminal in the first embodiment of the present invention;
Figs. 3(a), 3(b) and 3(c) are diagrams showing layouts of an information storage portion in the card in the first embodiment of the present invention respectively;
Fig. 4 is a flow chart of the three-party communication in the first embodiment of the present invention;
Fig. 5(a), 5(b), 5(c) and 5(d) are diagrams showing formats of a process completion message in the first embodiment of the present invention respectively;
Fig. 6 is a flow chart of three-party communication in a second embodiment of the present invention; and
Fig. 7 (a) and 7 (b) are diagrams showing formats of a process completion message in the second embodiment of the present invention.

### Reference numerals in the drawings designate respectively:

10: user terminal; 11: terminal operating portion; 12: card supervision portion; 13: terminal command communication portion; 30: card; 31: information disclosure portion; 32: card command communication portion; 33: card operating portion; 34: information storage portion; 35: second card command communication portion; 36: accumulation portion; 50: service terminal; 311: information storage portion; 331: information storage portion.

### <BEST MODE FOR CARRYING OUT THE INVENTION>

Embodiments of the present invention will be described below with reference to the drawings.

### (First Embodiment)

A first embodiment of the present invention will be described in the case in which a smart card (hereinafter referred to as "card" simply) having both contact communication and contactless communication functions is mounted and used in a user terminal such as a cellular phone.

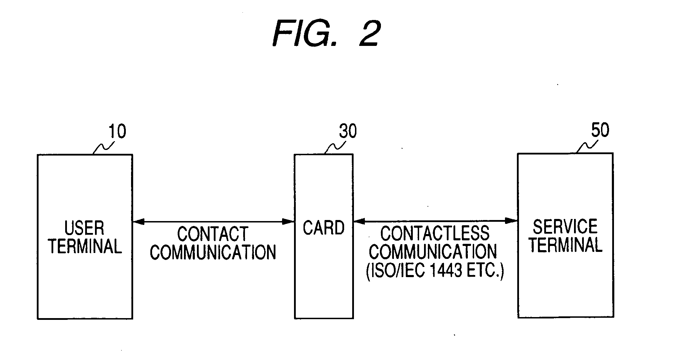

As shown in Fig. 2, this card 30 performs contact communication with a user terminal 10 and performs contactless communication complying with ISO/IEC 1443 etc. with a service terminal 50 such as a ticket gate machine.

For example, a payment process at the time of examination of a ticket is performed between the card 30 and the service terminal 50 by contactless communication. When this process is terminated, the card 30 generates a process completion message including information of a charged amount and so on. In order to confirm termination of the process by contactless communication in the card 30, the user terminal 10 performs polling on the card 30 by contact communication so as to check whether the process completion message has been generated or not. When the card 30 has generated the process completion message, the user terminal 10 acquires the message and performs a process of displaying the message on a display screen etc. of the user terminal 10.

The contactless communication and the contact communication performed thus in cooperation among the user terminal 10, the card 30 and the service terminal 50 will be called "three-party communication" here.

In the three-party communication, when the user terminal 10 makes a request for a process, by contact communication, to the card 30 engaging in execution of a process by contactless communication, there is possibility that the process sequence in execution is destroyed or unexpected information leakage etc. occurs.

For example, when a process request command from the user terminal 10 arrives at the card 30 in the middle of a ticket examination process performed by contactless communication, there will arise a situation that the ticket examination process is suspended, a ticket examination result is not recorded in the card 30 in spite of charging for it, or the user terminal 10 is allowed to gain access to data to be read/written only by ticket gate machine authority.

In order to avoid such a situation, in the three-party communication according to this embodiment, the user terminal 10 performs polling by contact communication on the card 30 engaging in execution of a process by contactless communication, without changing the internal status of the card 30 so as to check generation of the process completion message in the card 30. When the card 30 which has terminated the process by contactless communication has generated the process completion message, the user terminal 10 acquires the information and displays the information.

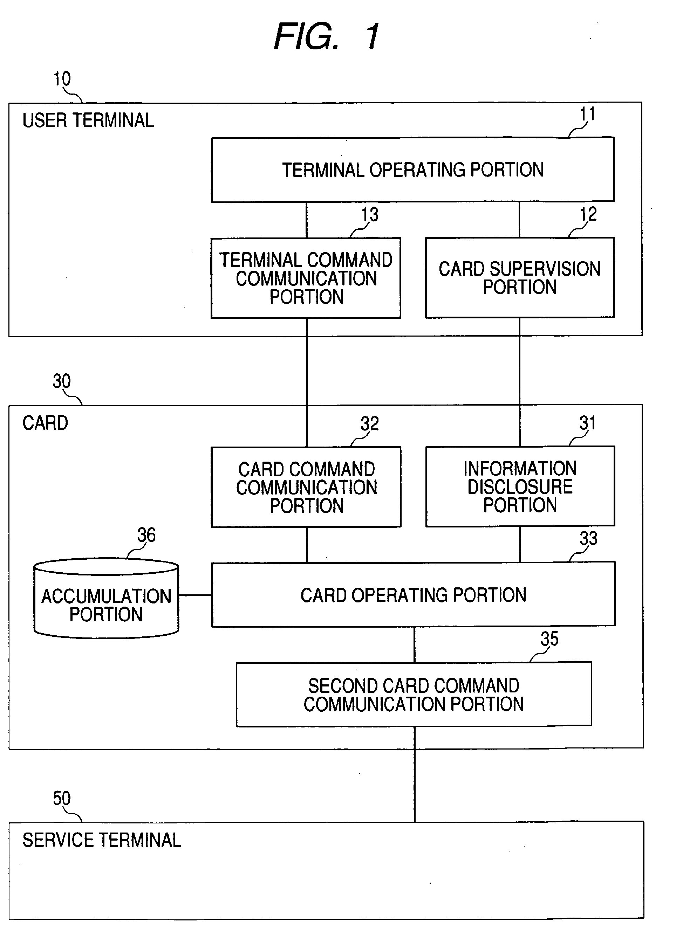

In order to execute such three-party communication, as shown in Fig. 1, the card 30 includes a card operating portion 33, an information disclosure portion 31, and a card command communication portion 32. The card operating portion 33 performs a process in the card. The information disclosure portion 31 stores information (process completion message) for confirming the status of the card 30 from the outside of the card. The card command communication portion 32 receives a command from the user terminal 10 and sends the user terminal 10 a result of a process executed by the card operating portion 33 in accordance with the command. The card 30 further includes a second card command communication portion for transmitting an operating result or a command of the card operating portion 33 to the service terminal, receiving a command or a processing result from the service terminal, and transferring the command or the processing result to the card operating portion 33 so as to prompt the card operating portion 33 to perform a process. In addition, the card 30 includes an accumulation portion 36 for accumulating data of the processing result.

On the other hand, the user terminal 10 includes a terminal operating portion 11, a terminal command communication portion 13, and a card supervision portion 12. The terminal operating portion 11 performs a process in the user terminal 10. The terminal command communication portion 13 transmits a command to the card 30 in accordance with an instruction of the terminal operating portion 11, and sends the terminal operating portion 11 a processing result received from the card 30. The card supervision portion 12 supervises the information disclosure portion 31 of the card 30 and informs the terminal operating portion 11 of a supervision result.

The terminal command communication portion 13 of the user terminal 10 transmits a command issued by the terminal operating portion 11 to the card command communication portion 32 of the card 30. This command is a command giving the card 30 an instruction to start contactless communication or giving the card 30 an instruction to read or rewrite data accumulated in the accumulation portion of the card 30, in the same manner as a command sent to the card by a conventional terminal performing contact communication. That is, the command is a command having an influence on the internal process of the card 30.

The card command communication portion 32 receives this command and transmits the command to the card operating portion 33. The card operating portion 33 executes a process requested by the command.

When the card operating portion 33 receives a command from the service terminal 50 through the second card command communication portion by contactless communication, the card operating portion 33 performs reading, rewriting, etc. upon data of the accumulation portion in accordance with the command so as to execute a process requested by the command. When the card operating portion 33 receives a command from the user terminal 10 in the middle of this process performed by contactless communication, the card operating portion 33 rejects the request of the user terminal 10 in accordance with a predetermined protection procedure.

When the card operating portion 33 having executed the process by contactless communication receives a command indicating termination of the process from the service terminal through the second card command communication portion and confirms the termination, the card operating portion 33 generates a process completion message including information of a charged amount etc. and transmits the process completion message to the information disclosure portion 31.

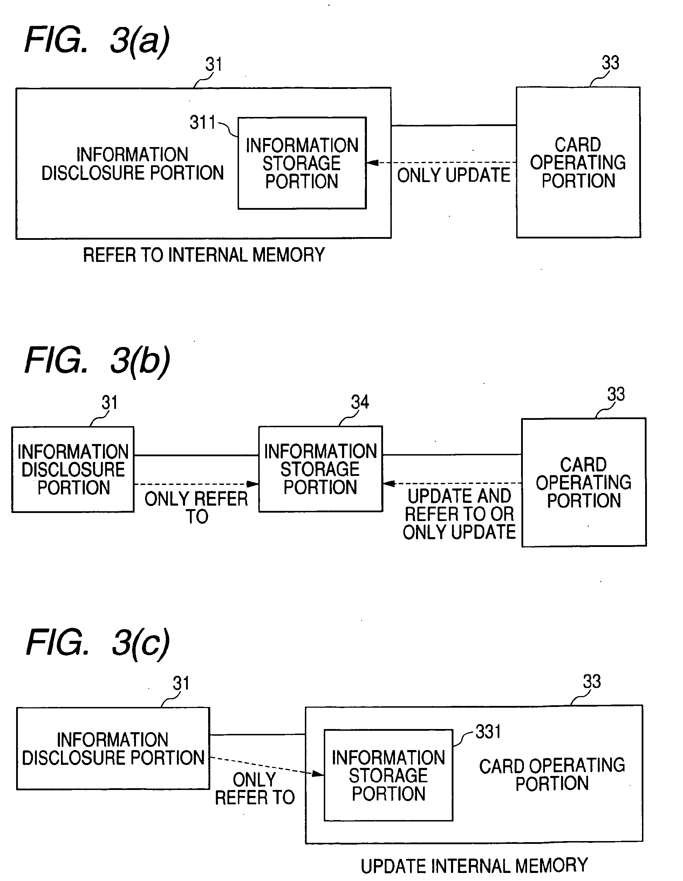

As shown in Fig. 3(a), the information disclosure portion 31 has an information storage portion 311 as an internal memory. The process completion message transmitted from the card operating portion 33 is stored in the information storage portion 311. Information stored in the information storage portion 311 can be updated only by the card operating portion 33. The information disclosure portion 31 is allowed to refer to the information in the information storage portion 311 but not allowed to update the information in the information storage portion 311.

The information disclosure portion 31 accepts access from the card supervision portion 12 of the user terminal 10 without authentication, refers to the information in the information storage portion 311, and informs the card supervision portion 12 of the information. The information disclosure portion 31 can be implemented by a register or a file on the card allowed to be accessed without authentication. In this manner, the information disclosure portion 31 does not make a request for a process such as an authentication process to the card supervision portion 12 gaining access thereto. Thus, this access has no influence on the internal process of the card 30 even when the access is performed in the middle of contactless communication of the card 30.

The card supervision portion 12 performs polling to supervise storage of a process completion message in the information disclosure portion 31 repetitively. When the process completion message is stored, the card supervision portion 12 receives the process completion message from the information disclosure portion 31 and transmits it to the terminal operating portion 11. The terminal operating portion 11 performs a process of displaying this information on a screen etc. of the user terminal 10. Thus, display indicating that "A ticket examination process has been terminated. The charged amount is 200 yen." is made on the screen etc. of the user terminal 10.

The card operating portion 33 of the card 30 generates the contents of the process completion message in accordance with a predetermined rule (i.e. a card application for defining a card operation).

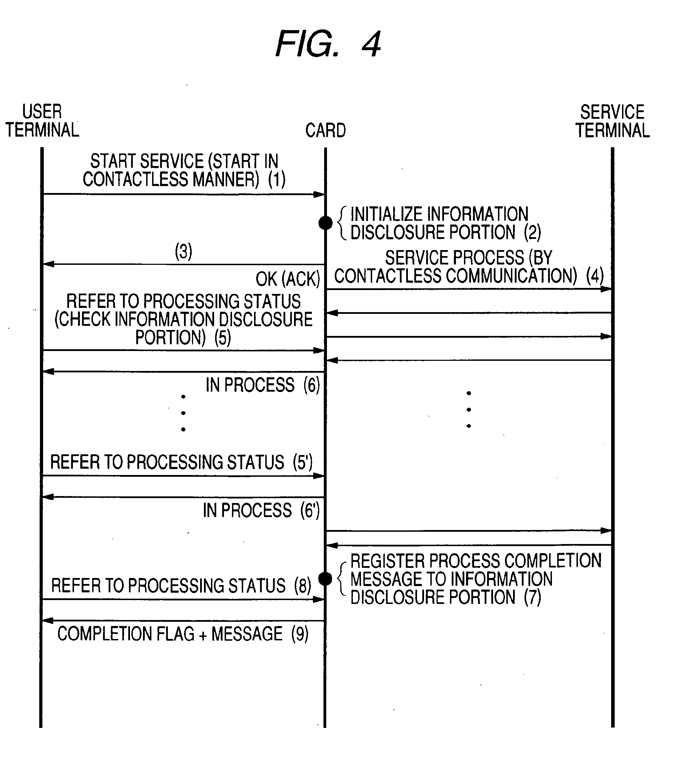

Fig. 4 shows a processing flow of this three-party communication.

With a user's input operation as a trigger, the terminal operating portion 11 of the user terminal 10 transmits a command to the card 30 from the terminal command communication portion 13 and gives the card 30 an instruction to start contactless communication with the service terminal 50 (1). After the card operating portion 33 has initialized information in the information disclosure portion 31 (2), the card operating portion 33 sends an acknowledgement to the user terminal 10 (3) and starts contactless communication with the service terminal 50 (4).

Through the card supervision portion 12, the user terminal 10 initiates polling to check the information disclosure portion 31 of the card 30 (5). While the process by contactless communication is continuing, the information disclosure portion 31 remains initialized, and from the information disclosure portion 31 the user terminal 10 receives information indicating that the information disclosure portion 31 is engaging in the process by contactless communication (6). The user terminal 10 supervises the information disclosure portion 31 repetitively (5') (6').

On the other hand, while continuing contactless communication with the service terminal 50, the card operating portion 33 of the card 30 performs reading, rewriting etc. upon data in the accumulation portion in accordance with a command from the service terminal 50 so as to execute a process requested by the command. When the card operating portion 33 concludes that a series of the processes have been terminated, the card operating portion 33 generates a process completion message and stores it in the information disclosure portion 31 (7).

When the user terminal 10 then checks the information disclosure portion 31 (8), the process completion message registered in the information disclosure portion 31 is transmitted to the user terminal 10 together with a completion flag attached thereto (9). This process completion message is displayed on the screen etc. of the user terminal 10.

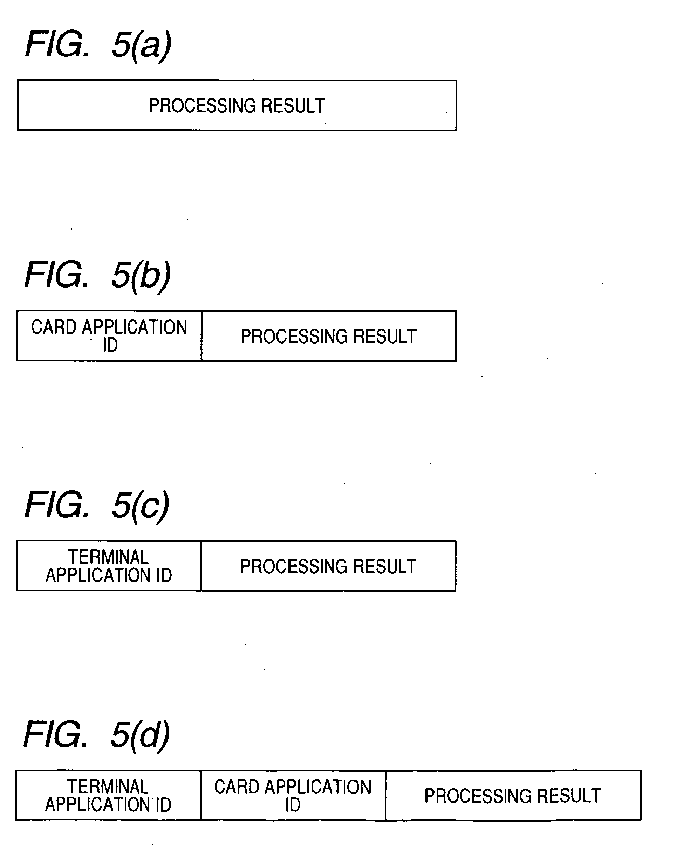

Fig. 5 shows each format of the process completion message transmitted from the card operating portion 33 of the card 30 to the information disclosure portion 31. In this format, the process completion message is also transmitted to the user terminal 10. The information contents of the process completion message may be transmitted directly as shown in Fig. 5(a), or the process completion message may be transmitted after an ID of a card application having performed the process by contactless communication is attached to the process completion message, as shown in Fig. 5(b). When the user terminal 10 gives the card 30 an instruction to start contactless communication with the service terminal 50 ((1) of Fig. 4), the user terminal 10 may inform the card 30 of an ID of a terminal application having given the instruction, and the card operating portion 33 may attach the terminal application ID to the process completion message, as shown in Fig. 5 (c) or 5 (d). When the terminal application ID is attached thus to the process completion message, the process completion message can be sent correctly to the terminal application having given the card 30 the instruction to start contactless communication, even in the case where a plurality of applications are operating on the user terminal 10.

Incidentally, although description has been made in the case where an application ID is attached by way example, arguments used for activating the terminal application may be transmitted to the information disclosure portion 31 together in a format in which the arguments are associated with the aforementioned application ID.

In addition, a terminal application to be activated can be selected in accordance with the category of the information contents of the process completion message. Specifically, the terminal operating portion 11 on the terminal side having received a processing result of the process completion message analyzes data of the processing result so as to determine which category the message belongs to, for example, image data or text data. Then, the terminal operating portion 11 selects a terminal application to be activated, based on the determined category. In this manner, a terminal application to be activated can be selected in accordance with the category of the process completion message.

As shown in Fig. 3(b), the process completion message generated by the card operating portion 33 may be stored in an information storage portion 34 which is a memory shared between the card operating portion 33 and the information disclosure portion 31. In this case, the card operating portion 33 is allowed to update and refer to (or only to update) the information in the information storage portion 34 while the information disclosure portion 31 is allowed only to refer to the information in the information storage portion 34. Alternatively, the process completion message may be stored in an information storage portion 331 which is an internal memory of the card operating portion 33, and the information disclosure portion 31 is allowed only to refer to the information storage portion 331, as shown in Fig. 3(c).

Although description has been made so far in the case where a result of a ticket examination process using contactless communication is displayed on the user terminal 10 by way example, three-party communication can be performed among the user terminal 10, the card 30 attached thereto, and a point-of-sale (POS) terminal serving as the service terminal 50, in the following manner. That is, a settlement process for charging a purchase amount to a value accumulated in the card 30 is performed by contactless communication between the card 30 and the POS terminal. When the settlement process is terminated, a settlement result or advertisement information transmitted from the POS terminal is displayed on the screen of the user terminal 10.

Further, on receiving the process completion message, the user terminal 10 may transmit a command to the card 30 having terminated contactless communication, so as to perform another process than display.

In this manner, a process performed by contactless communication and a process performed by contact communication in a card having both contactless communication and contact communication functions can be performed in cooperation in the three-party communication according to the embodiment.

### (Second Embodiment)

A second embodiment of the present invention will be described on three-party communication in which only a terminal application of a user terminal having given a card an instruction to perform contactless communication can notice a process completion message of the card.

In the three-party communication, the terminal application of the user terminal to give the card an instruction to perform contactless communication takes a procedure to exchange a common encryption key with the card and the card encrypts a process completion message with this encryption key. Accordingly, any other terminal application not having the common encryption key cannot decrypt the process completion message.

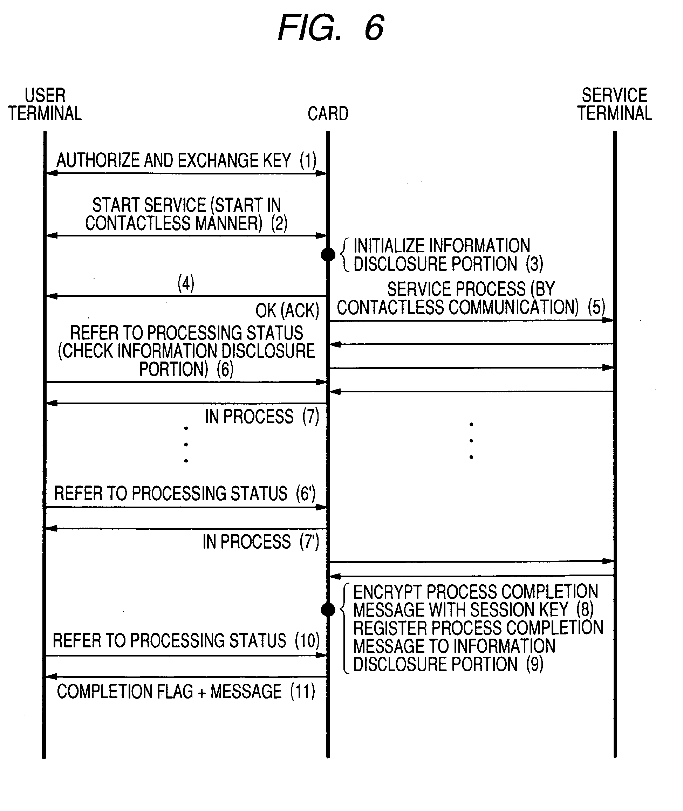

Fig. 6 shows a processing flow of this three-party communication. Incidentally, the configuration and relation among a user terminal, a card and a service terminal are the same as those in Fig. 1.

A terminal operating portion 11 of a user terminal 10 transmits a command to a card 30 through a terminal command communication portion 13 in accordance with a rule of a terminal application in execution so as to perform an authorization and key exchange process with the card 30 (1). In this process, the terminal operating portion 11 of the user terminal 10 and a card operating portion 33 of the card 30 share a session key which is a temporary encryption key, and the card operating portion 33 acquires an ID of the terminal application. The terminal operating portion 11 of the user terminal 10 transmits a command to the card 30 from the terminal command communication portion 13 in accordance with the rule of the terminal application in execution so as to give the card 30 an instruction to start contactless communication with a service terminal 50 (2). After the card operating portion 33 has initialized information in an information disclosure portion 31 (3), the card operating portion 33 sends an acknowledgement to the user terminal 10 (4) and starts contactless communication with the service terminal 50 (5).

The user terminal 10 initiates polling through a card supervision portion 12 to check the information disclosure portion 31 of the card 30 (6). While the process by contactless communication is continuing, the user terminal 10 receives information indicating that the card 30 is engaging in the process (7). The user terminal 10 supervises the information disclosure portion 31 repetitively (6') (7').

On the other hand, the card operating portion 33 of the card 30 executes the process by contactless communication with the service terminal 50 through a second card command communication portion 35. When the card operating portion 33 concludes that a series of processes have been terminated based on a command received from the service terminal 50 by the second.card command transmission portion 35, the card operating portion 33 generates a process completion message, encrypts it with the session key (8) and stores it in the information disclosure portion 31 (9).

When the user terminal 10 then checks the information disclosure portion 31 (10), the encrypted process completion message registered in the information disclosure portion 31 is transmitted to the user terminal 10 together with a completion flag attached thereto (11).

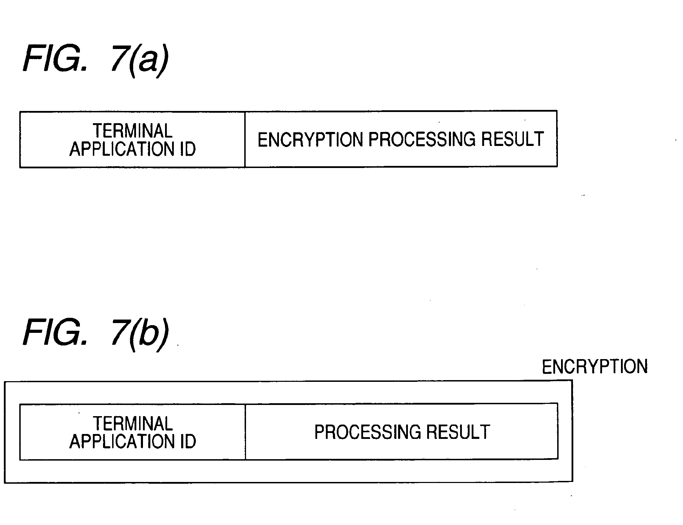

For example, as shown in Fig. 7(a), in the process completion message, only information indicating a processing result is encrypted and a plaintext terminal application ID is attached thereto. In this case, the process completion message is sent to the terminal application specified by the ID, decrypted and displayed on a screen etc. of the user terminal 10.

Alternatively, the processing result and the terminal application ID in the process completion message may be encrypted integrally, as shown in Fig. 7 (b). In this case, the process completion message is sent to each terminal application being executed by the terminal operating portion 11. Only the terminal application holding the session key can succeed in decrypting the message including its own terminal application ID, and display the message on .the screen etc. of the user terminal 10.

In this manner, in the three-party communication according to this embodiment, authorization and key exchange with the card are performed for each terminal application. Accordingly, even when a plurality of terminal applications are operating on the user terminal, meaningful information can be sent only to a specific one of the terminal applications.

Although the present invention has been described above in detail and with reference to specific embodiments, it is obvious to those skilled in the art that various changes or modifications can be made without departing from the spirit and scope of the present invention.

The present application is based on a Japanese patent application filed on July 23, 2003 (Japanese Patent Application No. 2003-278344), the contents of which are incorporated herein by reference.

### <INDUSTRIAL APPLICABILITY>

An information storage device according to the present invention is applicable to a smart card, various kinds of secure devices, etc. In addition, information processing apparatus according to the present invention is applicable to various information processing terminals such as a cellular phone, a PHS (Personal Handy-phone System), a PDA (Personal Digital Assistant), a communication function-including portable type personal computer, etc. each of which is mounted with this information storage device. These terminals can be designed to automatically perform a process in cooperation with a contactless communication process of the information storage device.

## Claims

1. An information storage device comprising first communication means, second communication means, and control means for performing processes in accordance with commands received from the first communication means and the second communication means, the information storage device comprising:
information storage means for storing disclosure information to be disclosed through the second communication means; and
information disclosure means for referring to the information storage means in accordance with an inquiry from the second communication means,
wherein the control means stores disclosure information indicating a result of a process performed through the first communication means in the information storage means, and
wherein the information disclosure means refers to the information storage means in response to an inquiry from the second communication means, and discloses the disclosure information when the disclosure information has been stored.

2. An information storage device comprising first communication means for performing communication in a contactless manner, second communication means for performing communication in a contact manner, and control means for performing processes in accordance with commands received from the first communication means and the second communication means, the information storage device comprising:
information storage means for storing disclosure information to be disclosed through the second communication means; and
information disclosure means for referring to the information storage means in accordance with an inquiry from the second communication means,
wherein the control means generates disclosure information and stores the disclosure information in the information storage means when a process performed through the first communication means has been terminated, and
wherein the information disclosure means refers to the information storage means in response to an inquiry from the second communication means, and discloses the disclosure information when the disclosure information has been stored.

3. An information storage device comprising first communication means for performing communication in a contact manner, second communication means for performing communication in a contactless manner, and control means for performing processes in accordance with commands received from the first communication means and the second communication means, the information storage device comprising:
information storage means for storing disclosure information to be disclosed through the second communication means; and
information disclosure means for referring to the information storage means in accordance with an inquiry from the second communication means,
wherein the control means generates disclosure information and stores the disclosure information in the information storage means when a process performed through the first communication means has been terminated, and
wherein the information disclosure means refers to the information storage means in response to an inquiry from the second communication means, and discloses the disclosure information when the disclosure information has been stored.

4. The information storage device according to any one of claims 1 through 3,
wherein the control means performs control so that disclosable information of the result of the process performed through the first communication means is contained in the disclosure information.

5. The information storage device according to any one of claims 1 through 3.,
wherein the control means exchanges an encryption key in advance with equipment to which the disclosure information should be disclosed through the second communication means, encrypts the disclosure information with the encryption key, and stores the encrypted disclosure information in the information storage means.

6. The information storage device according to any one of claims 1 through 3,
wherein the information disclosure means gives a response to the inquiry from the second communication means without performing any authentication process.

7. An information processing apparatus for performing communication through second communication means with an information storage device including first communication means and the second communication means, the information processing apparatus comprising:
disclosure information supervision means for supervising disclosure information indicating a result of a first process through the second communication means, the first process being performed through the first communication means by the information storage device,
wherein the information processing apparatus performs a second process when the disclosure information supervision means acquires the disclosure information from the information storage device.

8. An information processing apparatus for performing communication through second communication means with an information storage device including first communication means performing communication in a contactless manner and the second communication means performing communication in a contact manner, the information processing apparatus comprising:
disclosure information supervision means for supervising disclosure information through the second communication means, the disclosure information being generated by the information storage device when a first process is terminated, the first process being performed through the first communication means by the information storage device,
wherein the information processing apparatus performs a second process in cooperation with the first process when the disclosure information supervision means acquires the disclosure information from the information storage device.

9. An information processing apparatus for performing communication through second communication means with an information storage device including first communication means performing communication in a contact manner and the second communication means performing communication in a contactless manner, the information processing apparatus comprising:
disclosure information supervision means for supervising disclosure information through the second communication means, the disclosure information being generated by the information storage device when a first process is terminated, the first process being performed through the first communication means by the information storage device,
wherein the information processing apparatus performs a second process in cooperation with the first process when the disclosure information supervision means acquires the disclosure information from the information storage device.

10. The information processing apparatus according to any one of claims 7 through 9,
wherein the disclosure information supervision means repetitively performs polling on the information storage device engaging in execution of the first process, so as to supervise the disclosure information.

11. The information processing apparatus according to any one of claims 7 through 9,
wherein, as the second process, the information processing apparatus displays the disclosure information acquired from the information storage device.

12. The information processing apparatus according to any one of claims 7 through 9,
wherein the information processing apparatus exchanges an encryption key in advance with the information storage device, acquires the disclosure information encrypted from the information storage device, and decrypts the encrypted disclosure information with the encryption key.

13. The information processing apparatus according to any one of claims 7 through 9,
wherein, as the second process, the information processing apparatus activates a terminal function specified from an identifier designated explicitly in the disclosure information acquired from the information storage device.

14. The information processing apparatus according to any one of claims 7 through 9,
wherein, as the second process, the information processing apparatus identifies a category of the disclosure information acquired from the information storage device and activates a terminal function fitted to the information.

15. The information processing apparatus according to claim 13,
wherein arguments to be used for activating the terminal function are contained in the disclosure information.

16. The information processing apparatus according to claim 14,
wherein arguments to be used for activating the terminal function are contained in the disclosure information.
